# EUROPEAN PATENT SPECIFICATION

(11) **EP 1 658 536 B1**
(45) Date of publication and mention of the grant of the patent: **21.05.2008**
(21) Application number: 04766593.0
(22) Date of filing: 25.08.2004
(51) Int. Cl.: G05B 19/042, G05B 19/418

(54) **METHOD AND SYSTEM FOR REMOTE CONTROLLING THE CURRENT STATUS OF A PRODUCTION PROCESS OF AN ARTICLE HAVING A NUMBER OF PRODUCTION PROCESS STEPS**
VERFAHREN UND SYSTEM ZUR FERNSTEUERUNG DES AKTUELLEN STATUS EINES PRODUKTIONSPROZESSES EINES ARTIKELS MIT EINER ANZAHL VON PRODUKTIONS-PROZESSSCHRITTEN
PROCEDE ET SYSTEME DE TELECOMMANDE DE L'ETAT PRESENT DU PROCESSUS DE PRODUCTION D'UN ARTICLE AYANT UN CERTAIN NOMBRE D'ETAPES

(30) Priority: 26.08.2003 IT BO20030050
(43) Date of publication of application: 24.05.2006
(73) Proprietor: G.D SOCIETÀ PER AZIONI, 40133 Bologna (BO) (IT)
(72) Inventor: SPATAFORA, Mario, I-40057 Granarolo (IT)
(74) Representative: Jorio, Paolo
(86) International application number: PCT/EP2004/051898
(87) International publication number: WO 2005/019951

(56) References cited:
- WO-A-01/80200
- GB-A- 2 375 265
- US-A1- 2002 008 136
- US-A1- 2002 131 444

## Description

### TECHNICAL FIELD

The present invention relates to a method and system for remote controlling the current status of the production process of an article having a number of production process steps. The present invention may be used to advantage in the metalworking industry for manufacturing mechanical parts, to which the following description refers purely by way of example.

### BACKGROUND ART

A metalworking firm manufacturing complex articles, i.e. comprising numerous assembled parts, does not normally produce all the parts itself, but subcontracts production, or at least part of it, of some of the parts to outside firms. The decision to do this depends on various factors. For example, the firm may not have the machinery or personnel to handle certain jobs, and purchasing the machinery or acquiring additional personnel may prove difficult an,d/or economically unfeasible.

Subcontracting parts, however, may pose problems, by the firm losing direct control of the production process of the parts subcontracted out. That is, the firm no longer has direct control over progress and scheduling of the production process of the subcontracted parts, and must rely solely on agreements made with subcontractors.

In the past, to avoid problems caused by subcontractors failing to deliver on time, large stocks were maintained in contractors' warehouses. Given the rising cost of warehousing large stocks, however, metalworking firms currently implement a "just in time" warehousing policy, with stocks reduced to a bare minimum. Firms dealing with subcontractors are therefore currently faced with the problem of how to control the production process of subcontracted parts, so as to avoid, or at least predict in time, any delay in delivery on the part of the subcontractor.

To control the production process of subcontracted parts, one possible solution is for the subcontractor to be equipped with one of various currently marketed computerized production process control systems. This, however, is only feasible in the case of major subcontractors with advanced computer equipment, in that computerized production process control systems are expansive, are logistically complex, and call for connecting all the subcontractor work stations to a central data collection system.

EP-1164450-A1 discloses a monitoring device for at least one state parameter of an object; the monitoring device has at least one sensor for detecting the state parameters and at least one transmitter connected to the sensor for transmitting the state parameters or associated information. At least one converter converts the data received from the sensor into graphical representations and at least one mobile radio device wirelessly connected to the transmitter has a display for outputting the graphical representation.

DE10141744-A1 discloses a process visualization system connected to a mix of sensors and actuators by means of a field bus; the visualization system has distributed computers coupled by a communication unit to a server (connected with the Internet) via a local area network (LAN)

DE19962230-A1 discloses an industrial control system, in which devices for registering of reports or alarms for predefined operating conditions are available; these predefined operating conditions are processed through a converter so that they can be sent via a short message service report or an e-mail to a predefined distribution circuit according to the nature of the operating condition encountered. The report or alarm can be sent on one message circuit based on lists of personnel and locations, type of message to be sent, e.g. e-mail or SMS format and can include files for attachment to the message.

US2002008136-A1 discloses a process control method allowing an operator to readily confirm an order of operation processes and including the steps of : reading magnetic data of a control card when the control card is inserted; transmitting completion data based on a lot number identified from read magnetic data to a host computer; receiving update data by the host computer; writing next process data in the received data as a visually recognizable image on the control card; and writing the next process data as a visually recognizable image based on process data identified by the read magnetic data when a predetermined time period passes without receiving update data.

US2002131444-A1 discloses a communications system with database management; a database system is accessible via multiple communications channel types so as to store data entered by users, retrieve the data, and/or to retrieve lists of data according to codes entered by the users. Preferably, the data can be retrieved over wireless channels so that it is available wherever it is needed. Alternatively, the system may be used for collecting or transferring data according to codes transmitted by users over a wireless network.

### DISCLOSURE OF INVENTION

It is an object of the present invention to provide a method and system of remote controlling the production process of an article, which provide for solving the aforementioned problems, and which at the same time are cheap and easy to implement.

According to the present invention, there is provided a method and a system of remote controlling the current status of the production process of an article having a number of production process steps as recited in the attached claims.

### BRIEF DESCRIPTION OF THE DRAWINGS

A number of non-limiting embodiments of the present invention will be described by way of example with reference to the accompanying drawings, in which:
Figure 1 shows, schematically, a system for remote controlling the production process of an article in accordance with the present invention;
Figure 2 shows, schematically, an article controlled by the Figure 1 system;
Figure 3 shows, schematically, a printed sheet forming part of the Figure 1 system;
Figure 4 shows a schematic view in perspective of a pickup device of the Figure 1 system;
Figure 5 shows, schematically, a further embodiment of a system for remote controlling the production process of an article in accordance with the present invention.

### BEST MODE FOR CARRYING OUT THE INVENTION

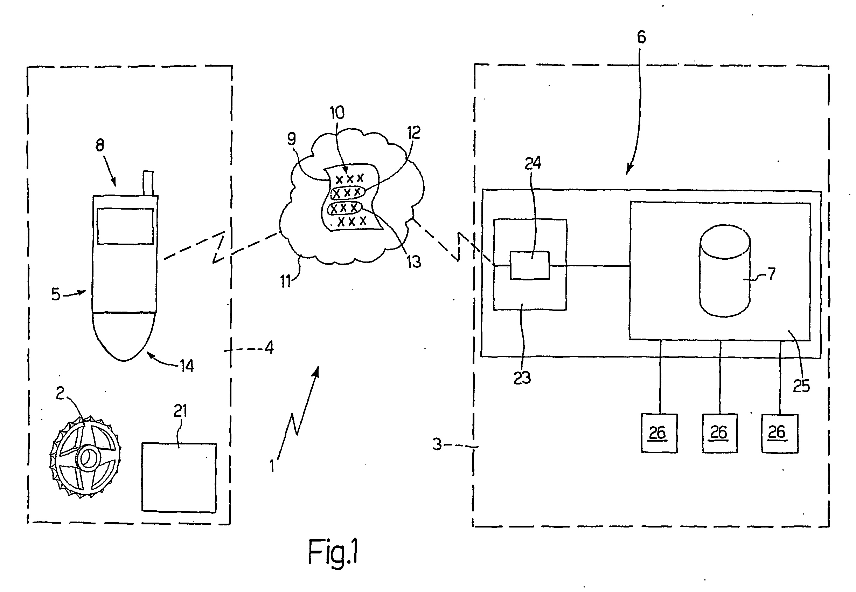

Number 1 in Figure 1 indicates as a whole a system for remote controlling the production process of a mechanical part 2. More specifically, mechanical part 2 is subtracted by a metalworking firm 3 to a subcontractor 4, so that subcontractor 4 produces part 2 on behalf of firm 3. The production process of part 2 comprises a series of steps which must be performed successively by an operator of subcontractor 4.

System 1 comprises a pickup device 5, which receives confirmation of completion of a production process step from a user; and a central control unit 6 connected to pickup device 5 and for storing the current status of the production process of part 2 in a database 7. Database 7 is of substantially known type, and comprises a series of records (not shown in detail), each of which relates to, and contains the history of, a respective part 2. Pickup device 5 and part 2 are obviously located physically at the plant of subcontractor 4 producing part 2, whereas control unit 6 is physically located at firm 3.

Pickup device 5 comprises a mobile telephone communication device 8, which communicates with central control unit 6 by sending SMS messages 9. More specifically, pickup device 5 codes confirmation of completion of a step in the production process of part 2 into an alphanumeric code 10, inserts code 10 into an SMS message 9, and sends the SMS message 9 to central control unit 6 over a mobile telephone network 11.

Code 10 preferably contains a sequence 12 identifying the completed production process step, and a sequence 13 identifying part 2. On receiving an SMS message 9 from pickup device 5, control unit 6 is therefore able to identify the part 2 in question, and the relative production process step that has been completed. Since subcontractor 4, in fact, actually produces a lot of parts 2 of the same type or a number of lots of parts 2 of different types simultaneously, control unit 6 must be able to identify not only the production process step that has been completed, but also the part 2 in question, or at least the lot to which part 2 refers.

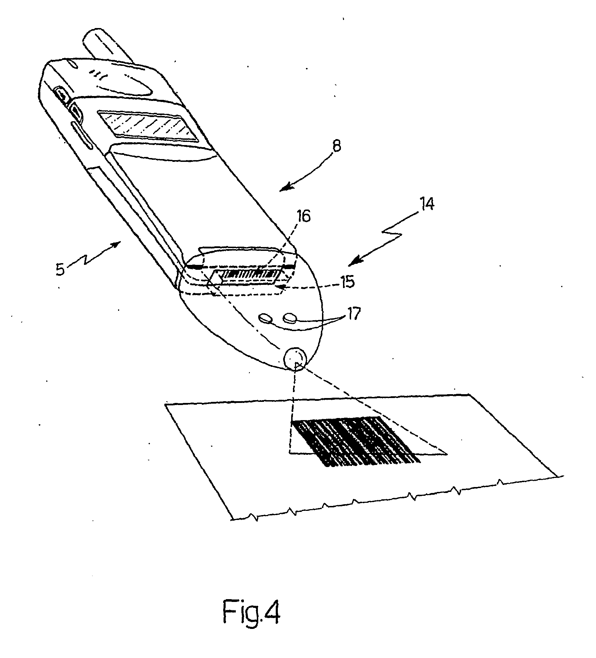

In a preferred embodiment shown in more detail in Figure 4, pickup device 5 is defined by a cellular telephone 8 equipped with a bar code reading device 14. Reading device 14 is detachable from cellular telephone 8, and comprises a communication port 15 which fits inside a similar communication port 16 of cellular telephone 8 when bar code reading device 14 is connected to cellular telephone 8. Reading device 14 may have and be controlled by a number of buttons 17, or may have no buttons and be controlled using the keys on cellular telephone 8.

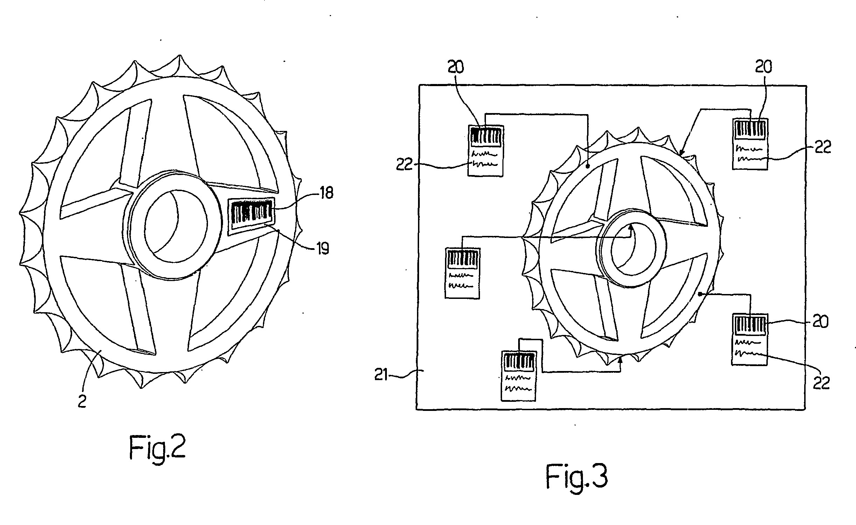

As shown in Figures 2 and 3, sequence 13 is communicated to pickup device 5 by pickup device 5 reading a relative bar code 18 printed on a label 19 associated with part 2. Label 19 may be attached directly to part 2, as shown in Figure 2, or may be attached to a production card (not shown) of part 2, or to a drawing of part 2.

Sequence 12 is communicated to pickup device 5 by pickup device 5 reading a relative bar code 20. Preferably, a sheet 21 is provided, on which is printed a series of bar codes 20, each relating to a given production process step. Next to each bar code 20 printed on sheet 21, a description 22 of the corresponding production process step is preferably also printed, and comprises verbal and/or pictorial information. Sheet 21 may also contain a drawing or the production cycle of part 2.

As shown in Figure 1, central control unit 6 comprises an interface computer 23 having a mobile telephone communication device 24; and a main computer 25 in which database 7 is stored. Communication device 24 is preferably defined by a mobile telephone communication card inserted inside interface computer 23. Whereas interface computer 23 serves solely for communicating with pickup devices 5, main computer 25 may also be used for processing information concerning production or assembly processes carried out directly by firm 3. In other words, database 7 may contain not only records relative to parts 2 being produced by subcontractor 4, but also records relative to all the parts 2 produced internally by firm 3 or by subcontractors 4. Data relating to parts 2 produced within firm 3 is obviously communicated to main computer 25 by data acquisition devices 26 connected to main computer 25 over the firm's communication network.

On receiving an SMS message 9 containing a respective code 10 from pickup device 5, control unit 6 may send pickup device 5 a further SMS message confirming reception. In which case, pickup device 5 only eliminates an SMS message 9 containing a respective code 10 from its own memory on receiving the respective further SMS message confirming reception from control unit 6.

In actual use, on completing a step in the production process of part 2, an operator of subcontractor 4, using pickup device 5, reads bar code 18 identifying part 2, and then reads bar code 20 identifying the step in the production process of part 2. Obviously, the information in code 18 could also be contained in code 20. At this point, pickup device 5 sends an SMS message 9 containing code 10 to control unit 6; and, on determining correct reception of SMS message 9, control unit 6 sends pickup device 5 a further SMS message confirming reception.

On receiving an SMS message 9 containing a respective code 10, control unit 6 identifies the completed production process step by means of sequence 12 in code 10, identifies part 2 by means of sequence 13 in code 10, and accordingly updates database 7 by entering completion of the production process step in a record relative to the part 2 in question.

It should be pointed out that the term production process step of part 2 refers to any type of operation or sequence of operations relating to a part 2. For example, a production process step may even be a dimensional check or rejection of a ruined part (even as a result of a processing error).

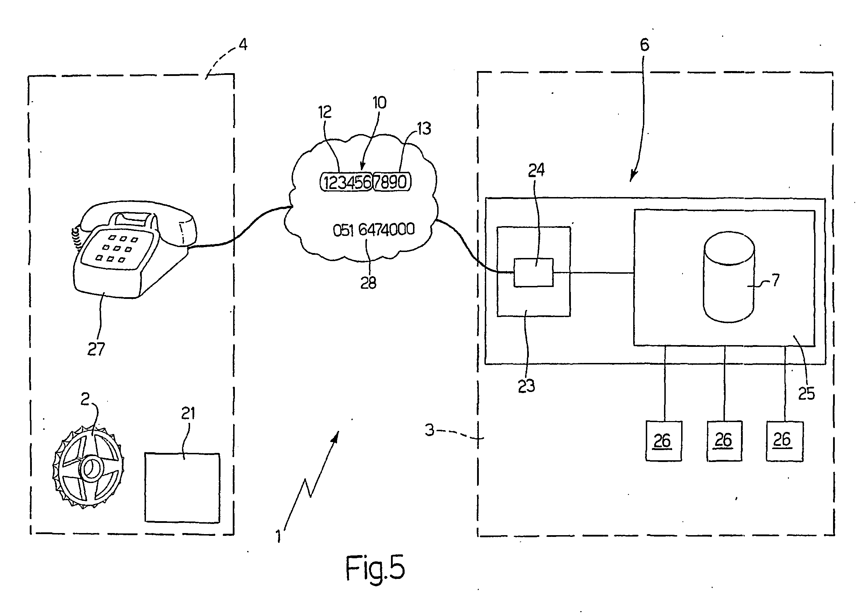

In an alternative embodiment shown in Figure 5, pickup device 5 is dispensed with, and, upon completion of a production process step of part 2, an operator codes completion confirmation by means of a respective numeric code 10, and transmits code 10 to central control unit 6 over a telephone 27, connected to a fixed telephone network, by keying a given telephone number 28 associated with control unit 6.

In a first embodiment, code 10 corresponds with the telephone number 28 keyed by the user. That is, on determining an incoming call to telephone number 28, control unit 6 is informed that a respective production process step of part 2 associated with the telephone number 28 called has been completed. Each production process step of part 2 is assigned a respective telephone number 28, i.e. a respective code 10 corresponding with telephone number 28, and a call made to telephone number 28 informs control unit 6 that the production process step of part 2 associated with the telephone number 28 called has been completed. It should be pointed out that, in known manner, control unit 6 can identify the telephone number of the telephone 27 from which the call is made, and so identify the caller.

In a second embodiment, code 10 is completely independent of the telephone number 28 keyed by the user. That is, on keying telephone number 28, the user connects respective telephone 27 to control unit 6, and, once the connection is made, transmits code 10 to control unit 6 by keying code 10 on the keyboard of telephone 27.

In a further embodiment, which is halfway between the two described above, a first part of code 10 corresponds with telephone number 28 keyed by the user.

Code 10 preferably comprises sequence 12 identifying the relative production process step, and sequence 13 identifying part 2. More specifically, sequence 13 is printed on a label 19 associated with part 2, and sequence 12 is printed on sheet 21 together with other sequences 12 relative to other production process steps.

System 1 described above allows a firm 3 complete, real-time control of the production process of part 2 carried out by a subcontractor 4 physically distant from firm 3. Moreover, system 1 described above is extremely cheap, and calls for no particular installation work at the subcontractor 4 plant : pickup devices 5 and sheets 21 may be supplied by firm 3 to subcontractor 4 for as long as required to produce one lot of parts 2, and then returned when production is completed. Logistically, production process control is run entirely by firm 3, who thus retains full control of the production process, with absolutely no burden being placed on subcontractor 4.

## Claims

1. A method of remote controlling the current status of the production process of an article (2) having a number of production process steps; the method comprising the steps of:
communicating by means of a pickup device (5) used by an operator confirmation of completion of a production process step to a central control unit (6) having a database (7); and
storing the current status of the production process of the article (2) in the database (7);
the method is **characterized in** comprising the steps of:
providing a sheet (21) on which is printed a series of first codes (20), each relating to a given production process step;
associating to the article (2) a label (19) on which is printed a second code (18) identifying the article (2);
reading a first code (20) on the sheet (21) using the pickup device (5) to store in the pickup device (5) a first sequence (12) identifying the production process step;
reading the second code (18) on the label (19) using the pickup device (5) to store in the pickup device (5) a second sequence (13) identifying the article (2);
coding inside the pickup device (5) confirmation of completion in an alphanumeric code (10) which comprises the first sequence (12) and the second sequence (13);
inserting the code (10) into an SMS message (9) inside the pickup device (5); and
sending the SMS message (9) to the central control unit (6) over a mobile telephone network (11) by using the pickup device (5).

2. A method as claimed in Claim 1, wherein each first code (20) is a bar code printed on the sheet (21) together with further first bar codes (20) relative to other production process steps.

3. A method as claimed in Claim 2, wherein a description (22) of the relative production process step is printed on the sheet (21), close to the first bar code (20) .

4. A method as claimed in Claim 3, wherein the description (22) comprises verbal and/or pictorial information.

5. A method as claimed in any one of Claims 1 to 4, wherein the second code (18) is a bar code printed on the label (19) associated with the article (2).

6. A method as claimed in any one of Claims 1 to 5, wherein, on receiving the SMS message (9) containing the code (10) from the pickup device (5), the central control unit (6) sends the pickup device (5) a further SMS message confirming reception.

7. A method as claimed in Claim 6, wherein the pickup device (5) only eliminates the SMS message (9) containing the code (10) from its memory upon receiving from the central control unit (6) the respective further SMS message confirming reception.

8. A system for remote controlling the production process of an article (2); the system (1) comprising:
a pickup device (5) for sending confirmation of completion of a production process step from an operator; and
a central control unit (6) connected to the pickup device (5) and which stores the current status of the production process of the article (2) in a database (7);
the system is **characterized in that**
the system comprises a sheet (21) on which is printed a series of first codes (20), each relating to a given production process step;
the system comprises a label (19) associated to the article (2) and on which is printed a second code (18) identifying the article (2);
the pickup device (5) comprises a first mobile telephone communication device (8) which communicates with the central control unit (6) by sending SMS messages (9);
the pickup device (5) codes confirmation of completion in an alphanumeric code (10), inserts the code (10) into an SMS message (9), and sends the SMS message (9) to the central control unit (6) over a mobile telephone network (11);
the code (10) comprises a first sequence (12), which identifies the production process step and is communicated to the pickup device (5) by the pickup device (5) reading on the sheet (21) a relative first code (20); and
the code (10) comprises a second sequence (13), which identifies the article (2) and is communicated to the pickup device (5) by the pickup device (5) reading on the label (1) the second code (18).

9. A system as claimed in Claim 8, wherein each first code (20) is a bar code printed on a sheet (21) together with further first bar codes (20) relative to other production process steps.

10. A system as claimed in Claim 9, wherein a description (22) of the relative production process step is printed on the sheet (21), close to the first bar code (20).

11. A system as claimed in Claim 10, wherein the description (22) comprises verbal and/or pictorial information.

12. A system as claimed in any one of Claims 8 to 11, wherein the second code (18) is a bar code printed on the label (19) associated with the article (2).

13. A system as claimed in any one of Claims 8 to 14, wherein, on receiving the SMS message (9) containing the code (10) from the pickup device (5), the central control unit (6) sends the pickup device (5) a further SMS message confirming reception.

14. A system as claimed in Claim 13, wherein the pickup device (5) only eliminates the SMS message (9) containing the code (10) from its memory upon receiving from the central control unit (6) the respective further SMS message confirming reception.

15. A system as claimed in any one of Claims 8 to 14, wherein the pickup device (5) is defined by a cellular telephone (8) having a code reading device (14).

16. A system as claimed in Claim 15, wherein the code reading device (14) is detachable from the cellular telephone (8), and has a first communication port (15) which fits in a second communication port (16) on the cellular telephone (8) when the code reading device (14) is fitted to the cellular telephone (8).

17. A system as claimed in any one of Claims 8 to 16, wherein the central control unit (6) comprises an interface computer (23) having a second mobile telephone communication device (24); and a main computer (25) in which the database (7) is stored.

## Patentansprüche

1. Verfahren zur Fernsteuerung bzw. -regelung des aktuellen Status des Produktionsprozesses eines Artikels (2) mit einer Anzahl von Produktionsprozessschritten; wobei das Verfahren die Schritte umfasst:
Kommunizieren, mittels einer von einer Bedienperson verwendeten Aufnahme- bzw. Abnahme- bzw. Aufnehmervorrichtung (5), der Komplettierung eines Produktionsprozesschritts an eine zentrale Steuer- bzw. Regeleinheit (6), die eine Datenbank (7) aufweist; und
Speichern des aktuellen Status des Produktionsprozesses des Artikels (2) in der Datenbank (7);
wobei das Verfahren **dadurch gekennzeichnet ist, dass** es die Schritte umfasst:
Bereitstellen eines Blatts (21), auf das eine Reihe von ersten Codes (20) gedruckt ist, die sich jeweils auf einen gegebenen Produktionsprozesschritt beziehen;
Zuordnen, zu dem Artikel (2), eines Etiketts bzw. Labels (19), auf das ein zweiter Code (18) gedruckt ist, der den Artikel (2) identifiziert;
Lesen eines ersten Codes (20) auf dem Blatt (21) unter Verwendung der Aufnehmervorrichtung (5), um in der Aufnehmervorrichtung (5) eine erste Sequenz (12) zu speichern, die den Produktionsprozesschritt identifiziert;
Lesen des zweiten Codes (18) auf dem Etikett (19) unter Verwendung der Aufnehmervorrichtung (5), um in der Aufnehmervorrichtung (5) eine zweite Sequenz (13) zu speichern, die den Artikel (2) identifiziert;
Codieren innerhalb der Aufnehmervorrichtung (5) einer Bestätigung der Komplettierung in einem alphanumerischen Code (10), der die erste Sequenz (12) und die zweite Sequenz (13) umfasst;
Einfügen des Codes (10) in eine SMS-Nachricht (9) innerhalb der Aufnehmervorrichtung (5); und
Senden der SMS-Nachricht (9) an die zentrale Steuer- bzw. Regeleinheit (6) über ein Mobiltelefonnetzwerk (11) unter Verwendung der Aufnehmervorrichtung (5).

2. Verfahren nach Anspruch 1, wobei jeder erste Code (20) ein Strichcode ist, der auf das Blatt (21) zusammen mit weiteren ersten Strichcodes (20) relativ zu anderen Produktionsprozesschritten gedruckt ist.

3. Verfahren nach Anspruch 2, wobei eine Beschreibung (22) des relativen Produktionsprozesschritts auf das Blatt (21) nahe des ersten Strichcodes (20) gedruckt ist.

4. Verfahren nach Anspruch 3, wobei die Beschreibung (22) verbale und/oder bildliche Informationen umfasst.

5. Verfahren nach einem der Ansprüche 1 bis 4, wobei der zweite Code (18) ein Strichcode ist, der auf das Etikett (19) gedruckt ist, das dem Artikel (2) zugeordnet wird.

6. Verfahren nach einem der Ansprüche 1 bis 5, wobei beim Empfangen der den Code (10) enthaltenden SMS-Nachricht (9) von der Aufnehmervorrichtung (5) die zentrale Steuer- bzw. Regeleinheit (6) der Aufnehmervorrichtung (5) eine weitere SMS-Nachricht sendet, die den Erhalt bestätigt.

7. Verfahren nach Anspruch 6, wobei die Aufnehmervorrichtung (5) die den Code (10) enthaltende SMS-Nachricht (9) nur bei Empfang der jeweiligen weiteren SMS-Nachricht, die den Erhalt betätigt, von der zentrale Steuer- bzw. Regeleinheit (6) aus ihrem Speicher eliminiert.

8. System zur Fernsteuerung bzw. -regelung des Produktionsprozesses eines Artikels (2); wobei das System (1) umfasst:
eine Aufnahme- bzw. Abnahme- bzw. Aufnehmervorrichtung (5) zum Senden einer Bestätigung der Komplettierung eines Produktionsprozesschritts von einer Bedienperson; und
eine zentrale Steuer- bzw. Regeleinheit (6) die mit der Aufnehmervorrichtung (5) verbunden ist und die den aktuellen Status des Produktionsprozesses des Artikels (2) in einer Datenbank (7) speichert;
wobei das System **dadurch gekennzeichnet, dass**
das System ein Blatt (21) umfasst, auf das eine Reihe von ersten Codes (20) gedruckt ist, die sich jeweils auf einen gegebenen Produktionsprozesschritt beziehen;
das System ein Etikett bzw. Label (19) umfasst, das dem Artikel (2) zugeordnet ist und auf das ein zweiter Code (18) gedruckt ist, der den Artikel (2) identifiziert;
die Aufnehmervorrichtung (5) eine erste Mobiltelefonkommunikationsvorrichtung (8) umfasst, die mit der zentralen Steuer- bzw. Regeleinheit (6) kommuniziert, indem sie SMS-Nachrichten (9) sendet;
die Aufnehmervorrichtung (5) eine Bestätigung der Komplettierung in einem alphanumerischen Code (10) codiert, den Code (10) in die SMS-Nachricht (9) einfügt und die SMS-Nachricht (9) über ein Mobiltelefonnetzwerk (11) an die zentrale Steuer- bzw. Regeleinheit (6) sendet;
der Code (10) eine erste Sequenz (12) umfasst, die den Produktionsprozessschritt identifiziert und an die Aufnehmervorrichtung (5) kommuniziert wird, indem die Aufnehmervorrichtung (5) auf dem Blatt (21) einen relativen ersten Code (20) liest; und
der Code (10) eine zweite Sequenz (13) umfasst, die den Artikel (2) identifiziert und die an die Aufnehmervorrichtung (5) kommuniziert wird, indem die Aufnehmervorrichtung (5) auf dem Etikett (1) den zweiten Code (18) liest.

9. System nach Anspruch 8, wobei jeder erste Code (20) ein Strichcode ist, der auf das Blatt (21) zusammen mit weiteren ersten Strichcodes (20) relativ zu anderen Produktionsprozesschritten gedruckt ist.

10. System nach Anspruch 9, wobei eine Beschreibung (22) des relativen Produktionsprozesschritts auf das Blatt (21) nahe des ersten Strichcodes (20) gedruckt ist.

11. System nach Anspruch 10, wobei die Beschreibung (22) verbale und/oder bildliche Informationen umfasst.

12. System nach einem der Ansprüche 8 bis 11, wobei der zweite Code (18) ein Strichcode ist, der auf das Etikett (19) gedruckt ist, das dem Artikel (2) zugeordnet ist.

13. System nach einem der Ansprüche 8 bis 14, wobei beim Empfangen der den Code (10) enthaltenden SMS-Nachricht (9) von der Aufnehmervorrichtung (5) die zentrale Steuer- bzw. Regeleinheit (6) der Aufnehmervorrichtung (5) eine weitere SMS-Nachricht sendet, die den Erhalt bestätigt.

14. System nach Anspruch 13, wobei die Aufnehmervorrichtung (5) die den Code (10) enthaltende SMS-Nachricht (9) nur bei Empfang der jeweiligen weiteren SMS-Nachricht, die den Erhalt bestätigt, von der zentralen Steuer- bzw. Regeleinheit (6) aus ihrem Speicher eliminiert.

15. System nach einem der Ansprüche 8 bis 14, wobei die Aufnehmervorrichtung (5) durch ein Mobilltelefon (8) definiert ist, das eine Codelesevorrichtung (14) aufweiset.

16. System nach Anspruch 15, wobei die Codelesevorrichtung (14) von dem Mobiltelefon (8) abnehmbar ist und einen ersten Kommunikationsanschluss (15) aufweist, der in einen zweiten Kommunikationsanschluss (16) an dem Mobiltelefon (8) passt, wenn die Codelesevorrichtung (14) an das Mobiltelefon (8) gepasst ist bzw. wird.

17. System nach einem der Ansprüche 8 bis 16, wobei die zentrale Steuer- bzw. Regeleinheit (6) einen Schnittstellencomputer (23), der eine zweite Mobiltelefonkommunikationseinrichtung (24) aufweist, und einen Hauptcomputer (25) umfasst, in dem die Datenbank (7) gespeichert ist.

## Revendications

1. Procédé permettant de contrôler à distance l'état actuel du processus de production d'un article (2) ayant un certain nombre d'étapes dans le processus de production ; le procédé comprenant les étapes consistant à :
communiquer au moyen d'un dispositif capteur (5) utilisé par un opérateur la confirmation de l'achèvement d'une étape du processus de production à une unité de commande centrale (6) ayant une base de données (7) ; et
stocker l'état actuel du processus de production de l'article (2) dans la base de données (7) ;
le procédé est **caractérisé en ce qu'**il comprend les étapes consistant à :
fournir une feuille (21) sur laquelle est imprimée une série de premiers codes (20), chacun relatif à une étape du processus de production donné ;
associer à l'article (2) une étiquette (19) sur laquelle est imprimé un second code (18) identifiant l'article (2) ;
lire un premier code (20) sur la feuille (21) en utilisant le dispositif capteur (5) pour stocker dans le dispositif capteur (5) une première séquence (12) identifiant l'étape du processus de production ;
lire le second code (18) sur l'étiquette (19) en utilisant le dispositif capteur (5) pour stocker dans le dispositif capteur (5) une seconde séquence (13) identifiant l'article (2) ;
coder à l'intérieur du dispositif capteur (5) la confirmation de l'achèvement dans un code alphanumérique (10) qui comprend la première séquence (12) et la seconde séquence (13) ;
insérer le code (10) dans un message SMS (9) à l'intérieur du dispositif capteur (5) ; et
envoyer le message SMS (9) à l'unité de commande centrale (6) sur un réseau de téléphonie mobile (11) en utilisant le dispositif capteur (5).

2. Procédé selon la revendication 1, dans lequel chaque premier code (20) est un code-barres imprimé sur la feuille (21) conjointement avec d'autres premiers codes-barres (20) relatifs à d'autres étapes du processus de production.

3. Procédé selon la revendication 2, dans lequel une description (22) de l'étape du processus de production relative est imprimée sur la feuille (21), près du premier code-barres (20).

4. Procédé selon la revendication 3, dans lequel la description (22) comprend des informations verbales et/ou graphiques.

5. Procédé selon l'une quelconque des revendications 1 à 4, dans lequel le second code (18) est un code-barres imprimé sur l'étiquette (19) associée à l'article (2).

6. Procédé selon l'une quelconque des revendications 1 à 5, dans lequel, à la réception du message SMS (9) contenant le code (10) en provenance du dispositif capteur (5), l'unité de commande centrale (6) envoie au dispositif capteur (5) un autre message SMS confirmant la réception.

7. Procédé selon la revendication 6, dans lequel le dispositif capteur (5) ne supprime le message SMS (9) contenant le code (10) de sa mémoire qu'à la réception en provenance de l'unité de commande centrale (6) de l'autre message SMS respectif confirmant la réception.

8. Système pour contrôler à distance le processus de production d'un article (2) ; le système (1) comprenant :
un dispositif capteur (5) pour envoyer la confirmation de l'achèvement d'une étape du processus de production depuis un opérateur ; et
une unité de commande centrale (6) connectée au dispositif capteur (5) et qui stocke l'état actuel du processus de production de l'article (2) dans une base de données (7) ;
le système est **caractérisé en ce que**
le système comprend une feuille (21) sur laquelle est imprimée une série de premiers codes (20), chacun relatif à une étape du processus de production donnée ;
le système comprend une étiquette (19) associée à l'article (2) et sur laquelle est imprimé un second code (18) identifiant l'article (2) ;
le dispositif capteur (5) comprend un premier dispositif de communication téléphonique mobile (8) qui communique avec l'unité de commande centrale (6) en envoyant des messages SMS (9) ;
le dispositif capteur (5) code la confirmation de l'achèvement dans un code alphanumérique (10), insère le code (10) dans un message SMS (9), et envoie le message SMS (9) à l'unité de commande centrale (6) sur un réseau de téléphonie mobile (11) ;
le code (10) comprend une première séquence (12), qui identifie l'étape du processus de production et est communiqué au dispositif capteur (5) par le dispositif capteur (5) lisant sur la feuille (21) un premier code relatif (20) ; et
le code (10) comprend une seconde séquence (13), qui identifie l'article (2) et est communiqué au dispositif capteur (5) par le dispositif capteur (5) lisant sur l'étiquette (1) le second code (18).

9. Système selon la revendication 8, dans lequel chaque premier code (20) est un code-barres imprimé sur une feuille (21) conjointement avec d'autres premiers codes-barres (20) relatifs à d'autres étapes du processus de production.

10. Système selon la revendication 9, dans lequel une description (22) de l'étape du processus de production relative est imprimée sur la feuille (21), près du premier code-barres (20).

11. Système selon la revendication 10, dans lequel la description (22) comprend des informations verbales et/ou graphiques.

12. Système selon l'une quelconque des revendications 8 à 11, dans lequel le second code (18) est un code-barres imprimé sur l'étiquette (19) associée à l'article (2).

13. Système selon l'une quelconque des revendications 8 à 14, dans lequel, à la réception du message SMS (9) contenant le code (10) en provenance du dispositif capteur (5), l'unité de commande centrale (6) envoie au dispositif capteur (5) un autre message SMS confirmant la réception.

14. Système selon la revendication 13, dans lequel le dispositif capteur (5) ne supprime le message SMS (9) contenant le code (10) de sa mémoire qu'à la réception en provenance de l'unité de commande centrale (6) de l'autre message SMS respectif confirmant la réception.

15. Système selon l'une quelconque des revendications 8 à 14, dans lequel le dispositif capteur (5) est défini par un téléphone cellulaire (8) ayant un dispositif de lecture de code (14).

16. Système selon la revendication 15, dans lequel le dispositif de lecture de code (14) est détachable du téléphone cellulaire (8), et comporte un premier port de communication (15) qui s'insère dans un second port de communication (16) sur le téléphone cellulaire (8) lorsque le dispositif de lecture de code (14) est mis sur le téléphone cellulaire (8).

17. Système selon l'une quelconque des revendications 8 à 16, dans lequel l'unité de commande centrale (6) comprend un ordinateur d'interface (23) ayant un second dispositif de communication téléphonique mobile (24) ; et un ordinateur principal (25) dans lequel la base de données (7) est stockée.
